(19) Europäisches Patentamt
European Patent Office
Office européen des brevets

(11) EP 3 083 812 B1

(12) FASCICULE DE BREVET EUROPEEN

(45) Date de publication et mention de la délivrance du brevet:
**15.07.2020 Bulletin 2020/29**

(21) Numéro de dépôt: **14806286.2**

(22) Date de dépôt: **03.12.2014**

(51) Int Cl.:
***C08L 9/06*** (2006.01) ***B60C 1/00*** (2006.01)
***B60C 11/13*** (2006.01) ***C08K 3/14*** (2006.01)
***C08K 3/22*** (2006.01)

(86) Numéro de dépôt international:
**PCT/EP2014/076451**

(87) Numéro de publication internationale:
**WO 2015/090976 (25.06.2015 Gazette 2015/25)**

(54) **PNEU DONT LA BANDE DE ROULEMENT COMPORTE DES ELEMENTS DE SCULPTURE AVEC DES PAROIS LATERALES RIGIDES COMPORTANT DES MICROPARTICULES D'OXYDE OU CARBURE METALLIQUE**

REIFEN MIT LAUFFLÄCHE MIT PROFILMUSTER MIT STARREN SEITENWÄNDEN MIT METALLOXID- ODER METALLCARBIDMIKROPARTIKELN

TIRE, THE TREAD OF WHICH COMPRISES TREAD PATTERN FEATURES WITH RIGID SIDEWALLS CONTAINING METAL OXIDE OR METAL CARBIDE MICROPARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363026**

(43) Date de publication de la demande:
**26.10.2016 Bulletin 2016/43**

(73) Titulaire: **Compagnie Générale des Etablissements Michelin**
**63000 Clermont-Ferrand (FR)**

(72) Inventeurs:
- **PAGANO, Salvatore**
**F-63040 Clermont-Ferrand Cedex 9 (FR)**
- **OCHIAI, Chika**
**Ota-ku**
**Tokyo 143-0014 (JP)**

(74) Mandataire: **Regimbeau**
**20, rue de Chazelles**
**75847 Paris Cedex 17 (FR)**

(56) Documents cités:
**WO-A1-02/053634**
**WO-A1-2005/044593**
**WO-A1-2011/073186**
**WO-A1-2013/087878**
**US-A- 3 878 147**

EP 3 083 812 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. DOMAINE DE L'INVENTION

L'invention est relative aux compositions de caoutchouc utilisables comme bandes de roulement de pneus pour véhicules, en particulier de pneus « hiver » aptes à rouler sur des sols recouverts de neige ou de glace sans être pourvus de clous (aussi appelés pneus "studless").

Elle est plus particulièrement relative aux pneus dont la bande de roulement présente une formulation spécifiquement adaptée non seulement à un roulage sur neige, mais aussi à un roulage sous conditions dites de « glace fondante » rencontrées dans un domaine de température compris entre -5°C et 0°C, domaine dans lequel de manière connue, la pression des pneus au passage d'un véhicule provoque une fusion superficielle de la glace qui se recouvre d'un mince film d'eau nuisible à l'adhérence de ces pneus.

### 2. ETAT DE LA TECHNIQUE

Pour améliorer la friction des bandes de roulements de pneus, il a été proposé d'appliquer des compositions comprenant des microparticules inorganiques dures sur les bandes de roulement (US 3,878,147).

Il a également été proposé de modifier les compositions de caoutchouc des bandes de roulement elles-mêmes. Notamment, dans WO 2010/009850, des compositions de caoutchouc utilisables comme bande de roulement d'un pneumatique d'hiver sont décrites. Elles comportent au moins un élastomère diénique, un agent plastifiant liquide, une charge renforçante et des microparticules creuses d'oxyde métallique.

Parallèlement, pour obtenir des performances satisfaisantes en roulage, notamment sur chaussée mouillée, enneigée voire verglacée, il est bien connu de pourvoir les bandes de roulement de pneus de telle ou telle sculpture appropriée, formée par des éléments de sculpture séparés les uns des autres par des « découpures » (rainures de largeur moyenne égale ou supérieure à 2 mm et/ou incisions de largeur moyenne inférieure à 2 mm), ces découpures étant obtenues par exemple par moulage. Ces éléments de sculpture comprennent une face de contact destinée à venir en contact avec la chaussée pendant le roulage et des parois latérales délimitant également les découpures ; l'intersection de chaque paroi latérale avec la face de contact forme une arête facilitant le contact du pneu avec la chaussée.

Par éléments de sculpture, on rappellera notamment ici que l'on distingue habituellement des éléments ne faisant pas le tour complet du pneumatique (appelés « blocs ») et des éléments faisant le tour complet (appelés « nervures »). Par ailleurs, les éléments de sculpture peuvent comporter une ou plusieurs incisions fines formant des arêtes supplémentaires.

Ces généralités étant rappelées, il est bien connu que la formulation des mélanges caoutchouteux (compositions de caoutchouc) composant la bande de roulement, en particulier pour les parties formant les arêtes ci-dessus, a une incidence notable sur les performances d'adhérence du pneu sur une chaussée, en particulier humide, enneigée, ou glacée.

Ainsi, la demande de brevet WO 2013/087878, déposée par les demanderesses, a décrit récemment un pneu du type hiver particulièrement bien adapté à un roulage sur route enneigée, dont la bande de roulement comporte :

- une pluralité d'éléments de sculpture formés d'un premier matériau caoutchouteux dit mélange ou matériau de base, délimités par des découpures ;
- ces éléments de sculpture comprenant une face de contact destinée à venir en contact avec la chaussée pendant le roulage du pneu, et des parois latérales formant des arêtes avec la face de contact ;
- sur tout ou partie de ces parois latérales, le matériau de base étant recouvert par une couche d'un second mélange ou matériau dit de recouvrement, différent du matériau de base, comportant au moins une composition de caoutchouc de formulation spécifique (en particulier une composition fortement chargée ayant une température de transition vitreuse élevée, ou encore une composition à très haut taux de soufre) apte à donner à la couche de recouvrement une très forte rigidité après vulcanisation du pneu, et qui placée à cet endroit de la sculpture est favorable à l'adhérence sur sol enneigé.

Des essais ultérieurs ont toutefois révélé que la bande de roulement décrite ci-dessus n'était pas optimisée pour fournir aux pneus et véhicules qui en sont équipés, de bonnes performances de roulage et d'adhérence à la fois sur un sol enneigé et verglacé, en particulier dans le deuxième cas sous des conditions de glace fondante.

### 3. BREVE DESCRIPTION DE L'INVENTION

Poursuivant leurs recherches sur la technologie ci-dessus, les demanderesses ont découvert un nouveau matériau de recouvrement avec une composition de caoutchouc à formulation spécifique à base d'un élastomère diénique

comportant des unités styréniques et butadiéniques, d'un agent d'expansion couplé à un composé thermofusible, de taux élevés de charge renforçante et de résine plastifiante hydrocarbonée combinés à un très faible taux ou à l'absence même d'agent plastifiant liquide, formulation qui permet de manière inattendue d'améliorer notablement le compromis d'adhérence sur sol enneigé et d'adhérence sur glace fondante.

En conséquence, la présente invention concerne un pneu dont la bande de roulement comporte :

- une pluralité d'éléments de sculpture (1) formés d'un premier matériau caoutchouteux dit matériau de base (MB), délimités par des découpures (3, 4) ;
- ces éléments de sculpture comprenant une face de contact (2) destinée à venir en contact avec la chaussée pendant le roulage du pneu, et au moins une paroi latérale (13, 14, 15, 16);
- sur au moins une paroi latérale de tout ou partie desdits éléments de sculpture, le matériau de base étant recouvert au moins en partie par une couche d'un second matériau caoutchouteux dit matériau de recouvrement (MR), différent du matériau de base, qui comporte au moins une composition de caoutchouc,

ce pneu étant caractérisé en ce que ladite composition de caoutchouc du matériau de recouvrement comporte au moins :

- 50 à 100 pce d'un copolymère à base d'unités styréniques et d'unités butadiéniques, dont la température de transition vitreuse est supérieure à -40°C ;
- optionnellement, 0 à 50 pce d'un autre élastomère diénique ;
- plus de 50 pce d'une charge renforçante ;
- entre 5 et 70 pce de microparticules d'un oxyde ou carbure métallique ;
- plus de 25 pce d'une résine plastifiante hydrocarbonée dont la température de transition vitreuse est supérieure à 20°C ;
- optionnellement, 0 à moins de 20 pce d'un agent plastifiant liquide.

L'invention concerne les pneus à l'état cru comme à l'état vulcanisé. Les pneus de l'invention sont particulièrement destinés à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (i.e., métro, bus, engins de transport routier tels que camions, tracteurs).

L'invention ainsi que ses avantages seront aisément compris à la lumière de la description et des exemples de réalisation qui suivent, ainsi que des figures annexées relatives à ces exemples, qui représentent très schématiquement :

- une vue partielle en plan d'une sculpture à blocs (1) d'une bande de roulement d'un pneu conforme à l'invention (Fig. 1) ;
- en coupe transversale, selon la ligne de coupe II-II de la figure 1, les blocs (1) de la figure 1 constitués du premier matériau de base (MB) recouvert, pour ce qui est des parois latérales (13, 15), du second matériau de recouvrement (MR) (Fig. 2).

## **4.** DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Selon l'invention, la bande de roulement du pneu de l'invention comporte donc (en référence aux figures 1 et 2) :

- une pluralité d'éléments de sculpture (1) formés d'un premier matériau caoutchouteux dit matériau de base (MB), délimités par des découpures (3, 4) ;
- ces éléments de sculpture comprenant une face de contact (2) destinée à venir en contact avec la chaussée pendant le roulage du pneu, et au moins une paroi latérale (13, 14, 15, 16);
- sur au moins une paroi latérale de tout ou partie desdits éléments de sculpture, le matériau de base étant recouvert, en partie ou totalement, par une couche d'un second matériau caoutchouteux dit matériau de recouvrement (MR), différent du matériau de base, comportant la composition de caoutchouc spécifique qui va être décrite en détail plus loin.

Sur la figure 1 annexée, on peut distinguer des faces de contact 2 de blocs 1 de forme rectangulaire d'une sculpture de bande de roulement selon l'invention, lesdits blocs 1 étant délimités par des rainures d'orientation longitudinale 4 et transversale ou axiale 3. Chacun de ces blocs 1 comporte quatre parois latérales 13, 14, 15, 16 dont les intersections avec la face de contact 2 forment, respectivement, des arêtes 23, 24, 25, 26 qui jouent un rôle important en roulage et en particulier sur chaussée rendue glissante (notamment par la présence d'eau, de neige ou de glace). Chaque bloc 1 est de forme rectangulaire de largeur L1 et de longueur L2, la direction de la largeur L1 des blocs étant dans le cas décrit confondue avec la direction longitudinale de la bande de roulement ou encore la direction circonférentielle sur le pneu pourvu de sa bande de roulement.

Le premier matériau caoutchouteux ou matériau de base (MB) dont sont constitués les éléments de sculpture (1) est une composition de caoutchouc usuelle pour bande de roulement de pneu hiver adapté notamment à un roulage sur sol verglacé, de préférence comportant au moins un élastomère diénique (typiquement 50 à 100 pce d'un élastomère diénique choisi préférentiellement parmi le caoutchouc naturel, les polybutadiènes et leurs coupages), entre 50 et 150 pce d'une charge renforçante (par exemple silice et/ou noir de carbone), plus de 30 pce d'un agent plastifiant liquide (à 23°C) et un système de vulcanisation (sans compter les autres additifs habituels).

Les quatre parois latérales 13, 14, 15, 16 sont recouvertes, dans cet exemple en totalité, avec une épaisseur El (visible sur la figure 2) sensiblement constante (sur toute la hauteur $H_R$ de recouvrement, dans le cas présent égale à la profondeur H des rainures 3) d'une couche de matériau de recouvrement MR, différent du matériau de base MB constituant les blocs. Sur cette coupe transversale de la figure 2, réalisée selon la ligne II-II de la figure 1 et perpendiculaire aux faces de contact 2 de deux blocs 1, on distingue bien la présence en surface de la couche de matériau de recouvrement MR sur les parois latérales 13 et 15 limitant les rainures d'orientation transversale 3.

Comme déjà expliqué dans la demande WO 2013/087878 précitée, les éléments de sculpture représentés sur ces exemples schématiques comportent une couche de matériau de recouvrement MR sur toutes leurs parois latérales, mais pour obtenir une excellente adhérence sur sol enneigé ou verglacé, ce sont les parois latérales dont l'orientation est normale à la direction circonférentielle du pneu ou dont l'orientation comporte une composante normale à la direction circonférentielle qui sont préférentiellement recouvertes de la couche du matériau de recouvrement. Par exemple, le matériau de recouvrement s'étend ici, à l'état neuf, jusqu'à l'arête formée par la limite entre la face de contact et la paroi latérale de l'élément de sculpture.

L'épaisseur El de la couche du matériau de recouvrement MR est de préférence supérieure à 0,1 mm, plus préférentiellement supérieure à 0,2 mm, en particulier comprise entre 0,2 mm et 4,0 mm selon les applications particulières visées, notamment les types de pneus (véhicules) concernés ; par exemple, pour des véhicules du type tourisme, El est de préférence comprise entre 0,3 mm et 1,0 mm.

Le pneu de l'invention est caractérisé en ce que la composition de caoutchouc du matériau de recouvrement comporte au moins :

- 50 à 100 pce d'un (au moins un, c'est-à-dire un ou plusieurs) copolymère à base d'unités styréniques et d'unités butadiéniques, dont la Tg (température de transition vitreuse) est supérieure à -40°C ;
- optionnellement, 0 à 50 pce d'un (au moins un, c'est-à-dire un ou plusieurs) autre élastomère diénique ;
- plus de 50 pce d'une (au moins une, c'est-à-dire une ou plusieurs) charge renforçante ;
- entre 5 et 70 pce de microparticules d'un (au moins un, c'est-à-dire un ou plusieurs) oxyde ou carbure métallique ;
- plus de 25 pce d'une (au moins une, c'est-à-dire une ou plusieurs) résine plastifiante hydrocarbonée dont la Tg est supérieure à 20°C ;
- optionnellement, 0 à moins de 20 pce d'un (au moins un, c'est-à-dire un ou plusieurs) agent plastifiant liquide.

Les différents composants ci-dessus vont être décrits en détail ci-après.

4.1. Copolymère à base d'unités styréniques et butadiéniques ; élastomère diénique optionnel

La composition de caoutchouc du matériau de recouvrement a pour première caractéristique essentielle de comporter 50 à 100 pce d'un copolymère à base d'unités styréniques et d'unités butadiéniques, c'est-à-dire d'un copolymère d'au moins un monomère styrénique et d'au moins un monomère butadiénique. Préférentiellement, le taux de ce copolymère est compris dans un domaine de 70 à 100 pce, plus préférentiellement de 80 à 100 pce.

Par monomère butadiénique doit être entendu dans la présente description tout monomère comprenant du butadiène, non substitué comme substitué. A titre de monomère butadiénique conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène.

Par monomère styrénique doit être entendu tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène. Conviennent particulièrement le styrène, les méthylstyrènes, le para-tertiobutylstyrène, les méthoxystyrènes, les chlorostyrènes.

Ledit copolymère à base d'unités styréniques et d'unités butadiéniques peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

De préférence, le copolymère à base d'unités styréniques et d'unités butadiéniques est choisi dans le groupe constitué par les copolymères styrène-butadiène (en abrégé SBR), les copolymères styrène-butadiène-isoprène (en abrégé SBIR) et les mélanges de tels copolymères.

Parmi les copolymères SBIR, on peut citer notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%.

Plus préférentiellement, on utilise un copolymère SBR. Parmi les copolymères SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

La Tg de ce copolymère à base d'unités styréniques et d'unités butadiéniques est supérieure à -40°C, de préférence supérieure à -35°C, plus préférentiellement comprise entre -30°C et +30°C (en particulier comprise dans un domaine de -25°C à +25°C).

La Tg des élastomères ici décrits est mesurée de manière conventionnelle, bien connue de l'homme du métier, sur un élastomère à l'état sec (i.e., sans huile d'extension) et par DSC (par exemple selon ASTM D3418-1999).

L'homme du métier sait comment modifier la microstructure d'un copolymère à base d'unités styréniques et d'unités butadiéniques, en particulier d'un SBR, pour augmenter et ajuster sa Tg, notamment en jouant sur les teneurs en styrène, en liaisons -1,2 ou encore en liaisons trans-1,4 de la partie butadiénique. On utilise plus préférentiellement un SBR (solution ou émulsion) ayant une teneur en styrène (% molaire) qui est supérieure à 35%, plus préférentiellement comprise entre 35% et 60%, en particulier dans un domaine de 38% à 50%. Au copolymère à base d'unités styréniques et d'unités butadiéniques ci-dessus, peut être optionnellement associé au moins un autre (dit aussi second) élastomère diénique, différent dudit copolymère (c'est-à-dire ne comportant pas à la fois des unités styréniques et butadiéniques) ; ce second élastomère diénique est présent à un taux pondéral qui est donc au plus égal à 50 pce (de préférence au plus égal à 30 pce, plus préférentiellement au plus égal à 20 pce).

Ce second élastomère diénique optionnel est préférentiellement choisi dans le groupe constitué par le caoutchouc naturel (NR), les polyisoprènes de synthèse (IR), les polybutadiènes (BR), les copolymères de butadiène (bien entendu, autres que ceux à base d'unités styréniques et d'unités butadiéniques), les copolymères d'isoprène et les mélanges de ces élastomères. De tels copolymères sont notamment choisis dans le groupe constitué par les copolymères d'isoprène-butadiène (BIR) et les copolymères d'isoprène-styrène (SIR).

Parmi ces derniers, conviennent notamment les homopolymères polybutadiène (BR) et en particulier ceux ayant une teneur (% molaire) en unités -1,2 comprise entre 4% et 80% ou ceux ayant une teneur (% molaire) en cis-1,4 supérieure à 80% ; les homopolymères polyisoprène (IR) ; les copolymères de butadiène-isoprène (BIR) et notamment ceux ayant une teneur en isoprène comprise entre 5% et 90% en poids et une Tg de - 40°C à - 80°C ; les copolymères isoprène-styrène (SIR) et notamment ceux ayant une teneur en styrène comprise entre 5% et 50% en poids et une Tg comprise entre - 25°C et - 50°C.

4.2. Charge renforçante

Toute charge connue pour ses capacités à renforcer une composition de caoutchouc est utilisable, par exemple une charge organique telle que du noir de carbone, ou une charge inorganique telle que de la silice à laquelle est associé de manière connue un agent de couplage, ou encore un coupage (mélange) de ces deux types de charge, notamment

un coupage de noir de carbone et de silice.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 50 et 150 pce. Une teneur supérieure à 50 pce est favorable à une bonne tenue mécanique ; au-delà de 150 pce, il existe un risque de dégradation de la processabilité de la composition de caoutchouc à l'état cru. Pour ces raisons, le taux de charge renforçante totale est plus préférentiellement compris dans un domaine de 60 à 140 pce, en particulier de 70 à 130 pce.

Comme noirs de carbone conviennent par exemple tous les noirs de carbone qui sont conventionnellement utilisés dans les pneus (noirs dits de grade pneu) tels que les noirs des séries 100, 200, 300 (grades ASTM), comme par exemple les noirs N115, N134, N234, N326, N330, N339, N347, N375, ou encore, selon les applications particulières visées, les noirs de séries plus élevées (par exemple N660, N683, N772). Les noirs de carbone pourraient être par exemple déjà incorporés à l'élastomère diénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" (« *non-black filler* ») par opposition au noir de carbone, capable de renforcer à elle seule, sans autre moyen qu'un agent de couplage intermédiaire, une composition de caoutchouc destinée à la fabrication de pneus, en d'autres termes apte à remplacer, dans sa fonction de renforcement, un noir de carbone conventionnel de grade pneu ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques conviennent notamment des charges minérales du type siliceuses, en particulier de la silice ($SiO_2$), ou du type alumineuses, en particulier de l'alumine ($Al_2O_3$). La silice utilisée peut être toute silice connue de l'homme du métier, notamment toute silice précipitée ou pyrogénée de préférence pyrogénée présentant une surface BET ainsi qu'une surface spécifique CTAB toutes deux inférieures à 450 $m^2/g$, de préférence de 20 à 400 $m^2/g$. De telles silices peuvent être couvertes ou non. A titre de silice de basse surface spécifique, on citera la « Sidistar R300 » de la société Elkem Silicon Materials. A titres de silices précipitées hautement dispersibles (dites "HDS"), on citera par exemple les silices « Ultrasil 7000 » et « Ultrasil 7005 » de la société Evonik, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837. A titre de silices de pyrogénation, on citera par exemple « CAB-O-SIL S-17D » de la société Cabot, « HDK T40 » de la société Wacker, « Aeroperl 300/30 », « Aerosil 380 », « Aerosil 150 » ou « Aerosil 90 » de la société Evonik. De telles silices peuvent être recouvertes comme par exemple la « CAB-O-SIL TS-530 » de la société Cabot recouverte avec l'hexaméthyldisilazane ou la « CAB-O-SIL TS-622 » de la société Cabot recouverte avec le diméthyldichlorosilane.

La charge inorganique utilisée, en particulier s'il s'agit de silice, a de préférence une surface BET comprise entre 20 et 400 $m^2/g$, plus préférentiellement comprise entre 60 et 300 $m^2/g$.

Selon un mode de réalisation particulièrement préférentiel, on utilise comme charge majoritaire une charge inorganique renforçante, en particulier de la silice, à un taux compris dans un domaine de 70 à 120 pce, charge inorganique renforçante à laquelle peut être ajoutée avantageusement du noir de carbone à un taux minoritaire au plus égal à 15 pce, en particulier compris dans un domaine de 1 à 10 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) $Z - A - S_x - A - Z$ ,

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

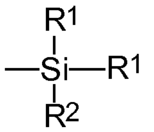 ; 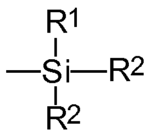 ; 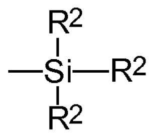 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elle est renforcée par une charge inorganique telle que silice, la composition en caoutchouc du matériau de recouvrement (MR) comporte de préférence entre 2 et 15 pce, plus préférentiellement entre 3 et 12 pce d'agent de couplage.

4.3. Microparticules d'oxyde ou carbure métallique

La composition de caoutchouc du matériau de recouvrement (MR) a pour autre caractéristique essentielle de comporter entre 5 et 70 pce de microparticules d'un carbure métallique ou d'un oxyde métallique.

Par microparticules, on entend par définition et de manière connue des particules dont la taille (i.e., diamètre ou la plus grande dimension dans le cas de particules anisométriques) est micrométrique, c'est-à-dire dont la taille médiane (exprimée en poids) est comprise entre 1 μm et 1 mm, de préférence entre 2 μm et 800 μm.

En dessous des minima indiqués ci-dessus, l'effet technique visé (à savoir la création d'une microrugosité adaptée) risque d'être diminué alors qu'au-delà des maxima indiqués, on peut s'exposer à différents inconvénients : outre une perte d'esthétique possible (particules trop visibles à la surface de la bande de roulement) et un risque de décohésion, lors du roulage, d'éléments de sculpture de taille relativement importante, on a constaté que la performance d'adhérence sur glace fondante pouvait être dégradée.

Pour toutes ces raisons, on préfère que les microparticules aient une taille médiane comprise entre 3 et 600 μm, plus préférentiellement entre 5 et 500 μm, en particulier dans un domaine de 5 à 200 μm. Ces domaines de taille particulièrement préférentiels semblent correspondre à un compromis optimisé entre d'une part la rugosité de surface recherchée et d'autre part un bon contact entre la composition de caoutchouc et la glace.

D'autre part, pour des raisons identiques à celles exposées ci-dessus, le taux de microparticules est de préférence compris entre 10 et 60 pce, plus préférentiellement compris dans un domaine de 15 à 50 pce.

Selon un autre mode de réalisation préférentiel, les microparticules sont des microparticules creuses.

Selon un autre mode de réalisation préférentiel, le métal du carbure métallique est choisi dans le groupe constitué par le bore, le chrome, le fer, le molybdène, le niobium, le silicium, le tantale, le titane, le tungstène, le vanadium, le zirconium et les mélanges de tels métaux. Plus préférentiellement encore, ce carbure métallique est un carbure de bore ($B_4C$) ou un carbure de silicium (SiC), plus particulièrement un carbure de silicium.

Selon un autre mode de réalisation préférentiel, le métal de l'oxyde métallique est choisi dans le groupe constitué par l'aluminium, le silicium, les métaux de transition (en particulier zirconium et titane) et les mélanges de tels métaux.

Plus préférentiellement encore, l'oxyde métallique est choisi dans le groupe constitué par les oxydes et/ou hydroxydes d'aluminium, les oxydes et/ou hydroxydes de silicium, les oxydes et/ou hydroxydes d'aluminium et silicium, et les mélanges de tels oxydes et/ou hydroxydes. Plus préférentiellement encore, cet oxyde métallique est un aluminosilicate.

On pourra utiliser plus particulièrement des microparticules creuses d'aluminosilicate telles qu'elles ont été décrites en particulier dans les demandes WO2011/073186, WO2011/086061, WO2011/113731.

Pour l'analyse de la granulométrie et le calcul de la taille médiane des microparticules (ou diamètre médian pour des microparticules supposées sensiblement sphériques), différentes méthodes connues sont applicables, par exemple par diffraction laser (par exemple selon normes ISO-8130-13 ou ISO 13320-1 citées notamment dans les demandes ci-dessus).

On peut aussi utiliser de manière simple, et préférentielle, une analyse de la granulométrie par un tamisage mécanique ; l'opération consiste à tamiser une quantité définie d'échantillon (par exemple 200 g) sur une table vibrante pendant 30 min avec des diamètres de tamis différents (par exemple, selon une raison de progression égale à 1,26, avec des mailles de 1000, 800, 630, 500, 400, ... 100, 80, 63 μm, etc.) ; les refus récoltés sur chaque tamis sont pesés sur une balance de précision ; on en déduit le % de refus pour chaque diamètre de maille par rapport au poids total de produit ; la taille médiane (ou diamètre médian) est finalement calculée de manière connue à partir de l'histogramme de la distribution granulométrique.

## 4.4. Résine plastifiante hydrocarbonée

La composition de caoutchouc du matériau de recouvrement (MR) comporte aussi, à titre de plastifiant solide (à 23°C), plus de 25 pce, de préférence plus de 30 pce d'une résine plastifiante hydrocarbonée présentant une Tg supérieure à +20°C, de préférence supérieure à +30°C, telle que décrite par exemple dans les demandes WO 2005/087859, WO 2006/061064 ou WO 2007/017060.

Les résines plastifiantes hydrocarbonées sont des polymères bien connus de l'homme du métier, essentiellement à base de carbone et hydrogène, miscibles par nature dans les compositions d'élastomère(s) diénique(s). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :

- une Tg supérieure à 30°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw

masse moléculaire moyenne en poids).

La Tg de cette résine est mesurée de manière connue par DSC (*Differential Scanning Calorimetry*), selon la norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 μm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$). De préférence, le composé vinyle-aromatique est du styrène ou un monomère vinylaromatique issu d'une coupe $C_9$ (ou plus généralement d'une coupe $C_8$ à $C_{10}$). De préférence, le composé vinylaromatique est le monomère minoritaire, exprimé en fraction molaire, dans le copolymère considéré.

Les résines préférentielles ci-dessus sont bien connues de l'homme du métier et disponibles commercialement, par exemple vendues en ce qui concerne les :

- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol; Mw=950 g/mol ; Ip=1,5 ; Tg=70°C) ;
- résines de copolymère coupe $C_5$/ vinylaromatique, notamment coupe $C_5$/ styrène ou coupe $C_5$/ coupe $C_9$ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Le taux de résine hydrocarbonée est préférentiellement compris entre 25 et 100 pce, plus préférentiellement entre 30 et 80 pce.

4.5. Agent plastifiant liquide

La composition de caoutchouc du matériau de recouvrement (MR) selon l'invention a pour autre caractéristique essentielle d'être dépourvue d'agent plastifiant liquide (à 23°C) ou tout au moins d'en comporter une faible (soit 0 à moins de 20 pce) ou très faible quantité (0 à moins de 15 pce, plus préférentiellement 0 à moins de 10 pce), contrairement aux compositions de caoutchouc usuelles pour bandes de roulement de pneus hiver adaptées au roulage sur rouges

enneigées ou verglacées, telles que celles qui sont utilisés pour constituer le matériau de base (MB) dans le pneu de la présente invention.

On rappellera en effet que, de manière bien connue, les compositions de caoutchouc utilisables pour constituer les bandes de roulement conventionnelles (sans matériau de recouvrement sur les parois latérales) de pneus du type hiver adaptés particulièrement à un roulage sur glace fondante, contiennent généralement plus de 30 pce, le plus souvent plus de 40 pce voire même plus de 50 pce d'un tel agent plastifiant liquide (voir par exemple WO2009/083125, WO2009/112220, WO2010/009850, WO2011/064128, WO2011/073186, WO2011/073188, WO2011/086061, WO2011/113731, WO2012/052331, WO2012/069565, WO2012/085063, WO2012/146611, WO2012/163998, WO2013/013985, WO2013/092340, WO2013/152980).

Les agents plastifiants liquides sont bien connus, leur fonction est de ramollir la matrice en diluant l'élastomère et la charge renforçante ; leur Tg est généralement inférieure à -20°C, plus généralement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées décrites précédemment qui sont par nature solides à température ambiante.

A titre d'exemples, on citera en particulier les agents plastifiants liquides choisis dans le groupe constitué par les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus particulier, l'agent plastifiant liquide est choisi dans le groupe constitué par les huiles MES, les huiles TDAE, les huiles naphténiques, les huiles végétales et les mélanges de ces huiles.

Si un agent plastifiant liquide est utilisé, ce dernier, notamment une huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huiles de pétrole, les huiles RAE, les huiles TRAE et les huiles SRAE ou les mélanges de ces huiles, qui contiennent de faibles teneurs en composés polycycliques.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Le taux de plastifiant liquide dans la composition du matériau de recouvrement (MR) selon l'invention est de préférence compris dans un domaine de 0 à moins de 15 pce, plus préférentiellement dans un domaine de 0 à moins de 10 pce.

Comparativement, le taux de plastifiant liquide (à 23°C) dans la composition du matériau de base (MB) du pneu conforme à l'invention est un taux conventionnel pour un pneumatique de type hiver, de préférence supérieur à 30 pce, plus préférentiellement supérieur à 40 pce.

D'autre part, pour une performance optimale de la bande de roulement du pneu de l'invention, si un plastifiant liquide est utilisé dans la composition du matériau de recouvrement (MR), il est présent à un taux tel que le rapport pondéral charge renforçante sur agent plastifiant liquide soit supérieur à 4, plus préférentiellement supérieur à 5, en particulier supérieur à 6.

4.6. Additifs divers

La composition de caoutchouc du matériau de recouvrement peut comporter également tout ou partie des additifs usuels habituellement utilisés dans les compositions de caoutchouc pour bandes de roulement, comme par

exemple des agents de protection tels que cires anti-ozone, anti-ozonants chimiques, anti-oxydants, des résines renforçantes, un système de réticulation à base soit de soufre, soit de donneurs de soufre et/ou de peroxyde et/ou de bismaléimides, des accélérateurs de vulcanisation, des activateurs de vulcanisation.

Elle peut également contenir des activateurs de couplage lorsque qu'un agent de couplage est utilisé, des agents de recouvrement de la charge inorganique lorsqu'une charge inorganique est utilisée, ou plus généralement des agents d'aide à la mise en œuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

4.7. Fabrication des compositions

Les compositions de caoutchouc du matériau de recouvrement (MR) précédemment décrites sont fabriquées dans des mélangeurs appropriés, en utilisant par exemple deux phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :

- incorporer à l'élastomère (ou mélange d'élastomères), dans un mélangeur, au moins la charge renforçante, les microparticules d'oxyde ou carbure métallique, la résine plastifiante hydrocarbonée, les éventuels autres additifs optionnels, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite un système de réticulation ;
- malaxer le tout jusqu'à une température maximale inférieure à 120°C.

A titre d'exemple, on introduit au cours de la première phase non-productive, dans un mélangeur approprié tel qu'un mélangeur interne usuel, tous les constituants nécessaires, les éventuels agents de recouvrement ou de mise en œuvre complémentaires et autres additifs divers, à l'exception du système de réticulation. Après travail thermomécanique, tombée et refroidissement du mélange ainsi obtenu, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tétrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore calandrée ou extrudée sous la forme d'une bande de produit semi-fini, à l'état cru, utilisable directement pour la fabrication du pneu de l'invention.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

D'autre part, pour une adhérence optimale sur sol enneigé, on a de préférence au moins une, plus préférentiellement les deux caractéristiques suivantes qui sont vérifiées sur la composition de caoutchouc du matériau de recouvrement (MR) à l'état vulcanisé :

- le module dynamique de cisaillement G* de la composition de caoutchouc, soumise à une contrainte maximale alternée de 0,7 MPa, à une fréquence de 10 Hz et à une température égale à -10°C, est supérieur à 200 MPa, plus préférentiellement supérieur à 400 MPa, en particulier entre 400 et 1200 MPa ;
- le module sécant en extension de la composition de caoutchouc, soumise à une élongation de 3% et à une température de -10°C, est supérieur à 200 MPa, plus préférentiellement supérieur à 400 MPa, en particulier compris entre 400 et 1200 MPa.

Comparativement, on a de préférence au moins une, plus préférentiellement les deux caractéristiques suivantes les deux caractéristiques suivantes qui sont vérifiées sur la composition de caoutchouc du matériau de base (MB) à l'état vulcanisé :

- le module dynamique de cisaillement G* de la composition de caoutchouc, soumise à une contrainte maximale alternée de 0,7 MPa, à une fréquence de 10 Hz et à une température égale à -10°C, est inférieur à 20 MPa, plus préférentiellement inférieur à 10 MPa, en particulier inférieur à 5 MPa ;
- le module sécant en extension (noté E3) de la composition de caoutchouc, soumise à une élongation de 3% et à une température de -10°C, est inférieur à 20 MPa, plus préférentiellement inférieur à 10 MPa, en particulier inférieur à 5 MPa.

Pour la mesure du module dynamique de cisaillement G* et la mesure du module sécant en extension, on procède comme décrit ci-après.

Pour rappel, les termes «module élastique G' » et «module visqueux G" » désignent des propriétés dynamiques bien connues de la personne du métier. Ces propriétés sont mesurées sur un viscosité-analyseur de type « Metravib VA4000 » sur des éprouvettes moulées à partir de compositions crues. Des éprouvettes telles que celles décrites dans la norme ASTM D 5992-96 (version publiée en septembre 2006, initialement approuvée en 1996) à la figure X2.1 (mode de réalisation circulaire) sont utilisées. Le diamètre « d » de l'éprouvette est de 10 mm (elle a donc une section circulaire de 78,5 $mm^2$), l'épaisseur « L » de chacune des portions de composition caoutchouteuse est de 2 mm, ce qui donne un ratio d/L de 5 (contrairement à la norme ISO 2856, mentionnée dans la norme ASTM, paragraphe X2.4, qui préconise une valeur d/L de 2).

On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0,7 MPa), symétriquement autour de sa position d'équilibre. Une accommodation de l'éprouvette est réalisée préalablement à la mesure. L'éprouvette est alors sollicitée en cisaillement sinusoïdal à 10Hz, à 100% de déformation crête-crête, à température ambiante (23°C).

La mesure est réalisée au cours d'une rampe de température croissante de 1,5°C par minute, depuis une température Tmin inférieure à la Tg du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies.

Le « module complexe » G* se définit comme la valeur absolue de la somme complexe des modules élastique G' et visqueux G" :

$$G^* = \sqrt{(G'^2 + G''^2}$$

Les propriétés en traction sont mesurées selon la norme ASTM D 412 de 1998 (éprouvette "C") ; on mesure en seconde élongation (i.e., après un cycle d'accommodation) le module sécant vrai c'est-à-dire ramené à la section réelle de l'éprouvette à 3%, noté E3 et exprimé en MPa (conditions normales de température et d'hygrométrie selon la norme ASTM D 1349 de 1999).

4.8. Fabrication du pneu de l'invention

La première étape de la fabrication d'une bande de roulement d'un pneu selon l'invention dont le matériau de base (MB) est recouvert pas sa couche de matériau de recouvrement (MR), est de préparer ladite couche de recouvrement.

On peut procéder par exemple, sans bien sûr que ce mode de réalisation particulier soit limitatif, comme décrit préférentiellement dans la demande précitée WO 2013/087878, à savoir en imprégnant un assemblage bidimensionnel

de fibres tel un tissu ou un intissé, ou un assemblage tridimensionnel de fibres tel un feutre, préalablement mis aux dimensions appropriées, par la composition de caoutchouc du matériau de recouvrement (MR). Cette imprégnation peut se faire par exemple par calandrage à chaud, par moulage sous presse ou encore par injection sous pression.

La présence de cet assemblage de fibres, imprégné par la composition de caoutchouc de la couche du matériau de recouvrement (MR), permet d'obtenir une excellente cohésion de la couche du matériau de recouvrement (MR) avant la vulcanisation du pneu et facilite ainsi la mise en place, lors du moulage du pneu, de cette couche du matériau de recouvrement (MR) sur le matériau de base (MB).

Des moyens autres qu'un assemblage de fibres pourraient bien entendu être utilisés pour améliorer la cohésion et la mise en place de la couche du matériau de recouvrement (MR) à l'état cru, par exemple un feuillard rigide en métal, en fibres de cellulose (e.g. papier, carton) ou autre polymère.

Bien entendu, si un tel assemblage de fibres ou feuillard ou autre moyen, est utilisé pour faciliter la pose de la composition de caoutchouc du matériau de recouvrement (MR) sur le matériau de base (MB), lors de la fabrication du pneu de l'invention, on comprend bien que le matériau de recouvrement (MR) dans le pneu de l'invention peut comporter alors, en plus de la composition de caoutchouc elle-même décrite en détail précédemment, cet assemblage de fibres ou feuillard ou autre moyen, sauf si ce dernier (assemblage de fibres ou feuillard ou autre moyen) est extrait avant la cuisson du pneumatique.

De préférence, les fibres utilisées sont des fibres longues, dont la plus grande dimension est supérieure à 30 mm, plus préférentiellement supérieure à 50 mm. Tout type de fibres, notamment fibres textiles ou minérales, peut être utilisé pour donner à la couche du matériau de recouvrement (MR) une rigidité d'extension suffisante pour faciliter la mise en place de cette couche de recouvrement dans les découpures de la sculpture de la bande de roulement. Parmi les fibres textiles, on peut citer les fibres textiles naturelles telles que les fibres en cellulose, coton, laine, ou les fibres textiles synthétiques, par exemple les fibres de polyester, polyamide, carbone, aramide, polyéthylène, polypropylène, polyacrylonitrile, polyimide, polysulfones, polyéther sulfones, polyuréthannes, d'alcool polyvinylique et leurs mélanges. Parmi les fibres minérales, on peut citer les fibres de verre et de basalte.

Puis, un moyen d'obtention d'une sculpture de bande de roulement selon l'invention consiste par exemple à recouvrir une ébauche crue (partie non sculptée destinée à être vulcanisée dans un moule pour obtenir le pneu) de bande de roulement fabriquée dans un mélange de base (MB), avec une couche du matériau de recouvrement (MR) d'épaisseur appropriée, avant de procéder au moulage de la bande de roulement et de ses rainures et incisions. Après moulage, le mélange de recouvrement (MR) se trouvant sur les faces de contact (2) peut être laissé en place ou bien éliminé par un moyen mécanique (notamment par un meulage).

Un autre mode de réalisation industrielle d'une bande de roulement selon l'invention, peut consister à déposer, sur l'ébauche de pneu non vulcanisé pourvue d'une bande de roulement en mélange de base non vulcanisé, des bandelettes de matériau de recouvrement, comme cela est décrit dans le document EP 0510550 (les bandelettes pouvant être déposées dans la direction circonférentielle et/ou transversale sur la bande de roulement). Une autre manière peut consister encore à réaliser la bande de roulement par co-extrusion de deux mélanges (ou plus) au moment de l'extrusion de la bande de roulement.

On peut encore opérer comme expliqué dans la demande WO 2013/087878 aux figures 5-6 et paragraphe IV-B.

Après vulcanisation du pneu de l'invention, la couche de matériau de recouvrement spécifique précédemment décrite a l'avantage de procurer une très forte rigidité à basse température (en dessous de 0°C) aux arêtes (23, 24, 25, 26) formées par l'intersection des faces de contact (2) et des parois latérales (13, 14, 15, 16), forte rigidité qui est particulièrement favorable au comportement du pneu sur un sol enneigé, tout en offrant à ce pneu, grâce à la présence des microparticules d'oxyde ou carbure métallique aptes à générer une microrugosité de surface particulièrement significative, une adhérence améliorée dans des conditions de roulage sur glace fondante.

## Revendications

1. Pneu dont la bande de roulement comporte :

    - une pluralité d'éléments de sculpture (1) formés d'un premier matériau caoutchouteux dit matériau de base (MB), délimités par des découpures (3, 4) ;
    - ces éléments de sculpture comprenant une face de contact (2) destinée à venir en contact avec la chaussée pendant le roulage du pneu, et au moins une paroi latérale (13, 14, 15, 16);
    - sur au moins une paroi latérale de tout ou partie desdits éléments de sculpture, le matériau de base étant recouvert au moins en partie par une couche d'un second matériau caoutchouteux dit matériau de recouvrement (MR), différent du matériau de base, qui comporte au moins une composition de caoutchouc,

    **caractérisé en ce que** ladite composition de caoutchouc du matériau de recouvrement comporte au moins :

- 50 à 100 pce d'un copolymère à base d'unités styréniques et d'unités butadiéniques, dont la température de transition vitreuse est supérieure à -40°C ;
- optionnellement, 0 à 50 pce d'un autre élastomère diénique ;
- plus de 50 pce d'une charge renforçante ;
- entre 5et 70 pce de microparticules d'un oxyde ou carbure métallique dont la taille médiane en poids est comprise entre 1 μm et 1 mm ;
- plus de 25 pce d'une résine plastifiante hydrocarbonée dont la température de transition vitreuse est supérieure à 20°C ;
- optionnellement, 0 à moins de 20 pce d'un agent plastifiant liquide.

**2.** Pneu selon la revendication 1, dans lequel le taux de copolymère à base d'unités styréniques et butadiéniques est compris dans un domaine de 70 à 100 pce, de préférence de 80 à 100 pce.

**3.** Pneu selon les revendications 1 ou 2, dans lequel le copolymère à base d'unités styréniques et butadiéniques est choisi dans le groupe constitué par les copolymères styrène-butadiène, les copolymères styrène-butadiène-isoprène et les mélanges de tels copolymères, de préférence est un copolymère styrène-butadiène.

**4.** Pneu selon l'une quelconque des revendications 1 à 3, dans lequel l'autre élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

**5.** Pneu selon l'une quelconque des revendications 1 à 4, dans lequel le taux de charge renforçante est compris entre 50 et 150 pce, de préférence compris dans un domaine de 60 à 140 pce.

**6.** Pneu selon l'une quelconque des revendications 1 à 5, dans lequel le taux de microparticules d'oxyde ou carbure métallique est compris entre 10 et 60 pce, de préférence dans un domaine de 15 à 50 pce.

**7.** Pneu selon l'une quelconque des revendications 1 à 6, dans lequel la taille médiane en poids des microparticules d'oxyde ou carbure métallique est comprise entre 2 et 800 μm, de préférence entre 3 et 600 μm.

**8.** Pneu selon l'une quelconque des revendications 1 à 7, dans lequel les microparticules sont des microparticules creuses.

**9.** Pneu selon l'une quelconque des revendications 1 à 8, dans lequel le métal du carbure métallique est choisi dans le groupe constitué par le bore, le chrome, le fer, le molybdène, le niobium, le silicium, le tantale, le titane, le tungstène, le vanadium, le zirconium et les mélanges de tels métaux.

**10.** Pneu selon la revendication 9, dans lequel le carbure métallique est un carbure de bore ou de silicium, de préférence un carbure de silicium.

**11.** Pneu selon l'une quelconque des revendications 1 à 10, dans lequel le métal de l'oxyde métallique est choisi dans le groupe constitué par l'aluminium, le silicium, les métaux de transition et les mélanges de tels métaux.

**12.** Pneu selon la revendication 11, dans lequel l'oxyde métallique est choisi dans le groupe constitué par les oxydes et/ou hydroxydes d'aluminium, les oxydes et/ou hydroxydes de silicium, les oxydes et/ou hydroxydes d'aluminium et silicium, et les mélanges de tels oxydes et/ou hydroxydes, de préférence est un aluminosilicate.

**13.** Pneu selon l'une quelconque des revendications 1 à 12, dans lequel le taux de résine plastifiante hydrocarbonée est compris entre 25 et 100 pce, de préférence entre 30 et 80 pce.

**14.** Pneu selon l'une quelconque des revendications 1 à 13, dans lequel le taux d'agent plastifiant liquide optionnel est compris dans un domaine de 0 à moins de 15 pce, de préférence de 0 à moins de 10 pce.

**15.** Pneu selon l'une quelconque des revendications 1 à 14, dans lequel l'épaisseur (E1) de la couche de matériau de recouvrement (MR) est supérieure à 0,1 mm, de préférence comprise entre 0,2 et 4,0 mm.

## Patentansprüche

1. Reifen, dessen Lauffläche umfasst:

   - eine Vielzahl von aus einem als Basismaterial (BM) bezeichneten ersten kautschukartigen Material gebildeten Profilelementen (1), die von Einschnitten (3, 4) begrenzt werden;
   - wobei diese Profilelemente eine Kontaktseite (2), die dazu bestimmt ist, während des Fahrens des Reifens mit der Fahrbahn in Kontakt zu kommen, und mindestens eine Seitenwand (13, 14, 15, 16) umfassen;
   - wobei das Basismaterial an mindestens einer Seitenwand aller oder eines Teils der Profilelemente mindestens zum Teil mit einer Schicht aus einem als Überzugsmaterial (ÜM) bezeichneten zweiten kautschukartigen Material überzogen ist, das sich vom Basismaterial unterscheidet und das mindestens eine Kautschukzusammensetzung umfasst,

   **dadurch gekennzeichnet, dass** die Kautschukzusammensetzung des Überzugsmaterials mindestens umfasst:

   - 50 bis 100 phe eines Copolymers auf Basis von Styroleinheiten und von Butadieneinheiten, dessen Glasübergangstemperatur größer als -40 °C ist;
   - optional 0 bis 50 phe eines weiteren Dienelastomers;
   - mehr als 50 phe eines verstärkenden Füllstoffs;
   - zwischen 5 und 70 phe Mikropartikel eines Metalloxids oder -carbids, deren mittlere Größe in Gewicht zwischen 1 μm und 1 mm liegt;
   - mehr als 25 phe eines weichmachenden Kohlenwasserstoffharzes, dessen Glasübergangstemperatur größer als 20 °C ist;
   - optional 0 bis weniger als 20 phe eines flüssigen Weichmachers.

2. Reifen nach Anspruch 1, wobei der Anteil an Copolymer auf Basis von Styrol- und Butadieneinheiten in einem Bereich von 70 bis 100 phe, vorzugsweise von 80 bis 100 phe liegt.

3. Reifen nach den Ansprüchen 1 oder 2, wobei das Copolymer auf Basis von Styrol- und Butadieneinheiten ausgewählt ist aus der Gruppe bestehend aus Styrol-Butadien-Copolymeren, Styrol-Butadien-Isopren-Copolymeren und den Mischungen solcher Copolymere, vorzugsweise ein Styrol-Butadien-Copolymer ist.

4. Reifen nach einem der Ansprüche 1 bis 3, wobei das weitere Dienelastomer ausgewählt ist aus der Gruppe bestehend aus Naturkautschuk, synthetischen Polyisoprenen, Polybutadienen, Butadien-Copolymeren, Isopren-Copolymeren und den Mischungen dieser Elastomere.

5. Reifen nach einem der Ansprüche 1 bis 4, wobei der Anteil an verstärkendem Füllstoff zwischen 50 und 150 phe liegt, vorzugsweise in einem Bereich von 60 bis 140 phe liegt.

6. Reifen nach einem der Ansprüche 1 bis 5, wobei der Anteil an Mikropartikeln aus Metalloxid oder -carbid zwischen 10 und 60 phe, vorzugsweise in einem Bereich von 15 bis 50 phe liegt.

7. Reifen nach einem der Ansprüche 1 bis 6, wobei die mittlere Größe in Gewicht der Mikropartikel aus Metalloxid oder -carbid zwischen 2 und 800 μm, vorzugsweise zwischen 3 und 600 μm liegt.

8. Reifen nach einem der Ansprüche 1 bis 7, wobei die Mikropartikel hohle Mikropartikel sind.

9. Reifen nach einem der Ansprüche 1 bis 8, wobei das Metall des Metallcarbids ausgewählt ist aus der Gruppe bestehend aus Bor, Chrom, Eisen, Molybdän, Niob, Silicium, Tantal, Titan, Wolfram, Vanadium, Zirkonium und den Mischungen solcher Metalle.

10. Reifen nach Anspruch 9, wobei das Metallcarbid ein Bor- oder Siliciumcarbid, vorzugsweise ein Siliciumcarbid ist.

11. Reifen nach einem der Ansprüche 1 bis 10, wobei das Metall des Metalloxids ausgewählt ist aus der Gruppe bestehend aus Aluminium, Silicium, Übergangsmetallen und den Mischungen solcher Metalle.

12. Reifen nach Anspruch 11, wobei das Metalloxid ausgewählt ist aus der Gruppe bestehend aus Aluminiumoxiden und/oder -hydroxiden, Siliciumoxiden und/oder -hydroxiden, Aluminium- und Siliciumoxiden und/oder -hydroxiden

und den Mischungen solcher Oxide und/oder Hydroxide, vorzugsweise ein Aluminosilikat ist.

**13.** Reifen nach einem der Ansprüche 1 bis 12, wobei der Anteil an weichmachendem Kohlenwasserstoffharz zwischen 25 und 100 phe, vorzugsweise zwischen 30 und 80 phe liegt.

**14.** Reifen nach einem der Ansprüche 1 bis 13, wobei der Anteil an optionalem flüssigem Weichmacher in einem Bereich von 0 bis weniger als 15 phe, vorzugsweise von 0 bis weniger als 10 phe liegt.

**15.** Reifen nach einem der Ansprüche 1 bis 14, wobei die Dicke (E1) der Schicht aus Überzugsmaterial (ÜM) größer als 0,1 mm ist, vorzugsweise zwischen 0,2 und 4,0 mm liegt.

**Claims**

**1.** Tyre, the tread of which comprises:

- a plurality of tread pattern features (1) formed from a first rubber-like material called base material (MB), defined by cut-outs (3, 4);
- these tread pattern features comprising a contact face (2) intended to come in contact with the road during the rolling of the tyre, and at least one sidewall (13, 14, 15, 16);
- on at least one sidewall of all or a part of said tread pattern features, the base material being at least partly covered by a layer of a second rubber-like material called covering material (MR), different from the base material, which comprises at least one rubber composition,

**characterised in that** said rubber composition of the covering material comprises at least:

- 50 to 100 phr of a copolymer based on styrene units and butadiene units, the glass transition temperature of which is greater than -40°C;
- optionally, 0 to 50 phr of another diene elastomer;
- more than 50 phr of a reinforcing filler;
- between 5 and 70 phr of microparticles of a metal oxide or carbide, the median size by weight of which is between 1 μm and 1 mm;
- more than 25 phr of a hydrocarbon plasticising resin, the glass transition temperature of which is greater than 20°C;
- optionally, 0 to less than 20 phr of a liquid plasticiser.

**2.** Tyre according to claim 1, wherein the amount of copolymer based on styrene and butadiene units is comprised in a range of 70 to 100 phr, preferably of 80 to 100 phr.

**3.** Tyre according to claims 1 or 2, wherein the copolymer based on styrene and butadiene units is chosen from the group consisting of the styrene-butadiene copolymers, the styrene-butadiene-isoprene copolymers and mixtures of such copolymers, preferably is a styrene-butadiene copolymer.

**4.** Tyre according to any one of claims 1 to 3, wherein the other diene elastomer is chosen from the group consisting of natural rubber, the synthetic polyisoprenes, the polybutadienes, the copolymers of butadiene, the copolymers of isoprene and mixtures of these elastomers.

**5.** Tyre according to any one of claims 1 to 4, wherein the amount of reinforcing filler is comprised between 50 and 150 phr, preferably comprised in a range of 60 to 140 phr.

**6.** Tyre according to any one of claims 1 to 5, wherein the amount of microparticles of metal oxide or carbide is comprised between 10 and 60 phr, preferably in a range of 15 to 50 phr.

**7.** Tyre according to any one of claims 1 to 6, wherein the median size by weight of the microparticles of metal oxide or carbide is comprised between 2 and 800 μm, preferably between 3 and 600 μm.

**8.** Tyre according to any one of claims 1 to 7, wherein the microparticles are hollow microparticles.

**9.** Tyre according to any one of claims 1 to 8, wherein the metal of the metal carbide is chosen from the group consisting of boron, chromium, iron, molybdenum, niobium, silicon, tantalum, titanium, tungsten, vanadium, zirconium and mixtures of such metals.

**10.** Tyre according to claim 9, wherein the metal carbide is a boron or silicon carbide, preferably a silicon carbide.

**11.** Tyre according to any one of claims 1 to 10, wherein the metal of the metal oxide is chosen from the group consisting of aluminium, silicon, transition metals and mixtures of such metals.

**12.** Tyre according to claim 11, wherein the metal oxide is chosen from the group consisting of the oxides and/or hydroxides of aluminium, the oxides and/or hydroxides of silicon, the oxides and/or hydroxides of aluminium and silicon, and mixtures of such oxides and/or hydroxides, preferably is an aluminosilicate.

**13.** Tyre according to any one of claims 1 to 12, wherein the amount of hydrocarbon plasticising resin is comprised between 25 and 100 phr, preferably between 30 and 80 phr.

**14.** Tyre according to any one of claims 1 to 13, wherein the amount of optional liquid plasticiser is comprised in a range of 0 to less than 15 phr, preferably of 0 to less than 10 phr.

**15.** Tyre according to any one of claims 1 to 14, wherein the thickness (E1) of the layer of covering material (MR) is greater than 0.1 mm, preferably comprised between 0.2 and 4.0 mm.

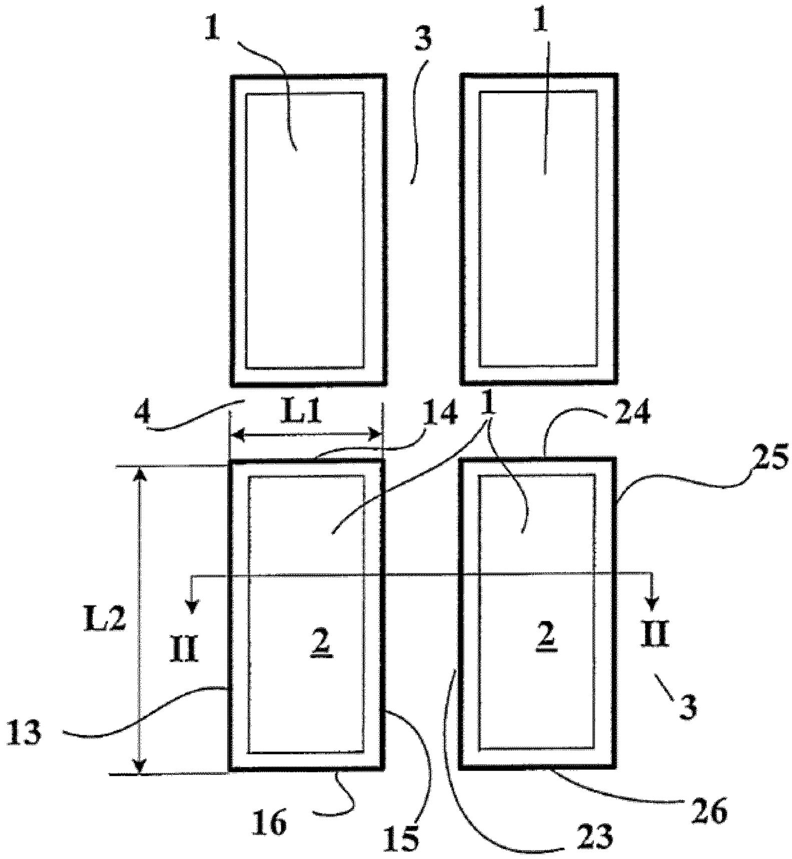


FIG. 1

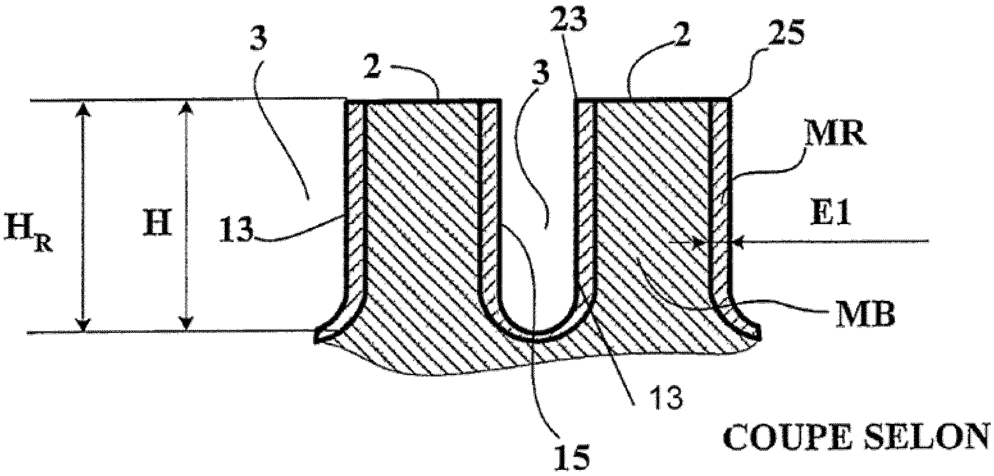


COUPE SELON II-II

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3878147 A
- WO 2010009850 A
- WO 2013087878 A
- WO 9736724 A
- WO 9916600 A
- WO 2006069792 A
- WO 2006069793 A
- WO 2008003434 A
- WO 2008003435 A
- WO 0316837 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 2011073186 A
- WO 2011086061 A
- WO 2011113731 A
- WO 2005087859 A
- WO 2006061064 A
- WO 2007017060 A
- WO 2009083125 A
- WO 2009112220 A
- WO 2011064128 A
- WO 2011073188 A
- WO 2012052331 A
- WO 2012069565 A
- WO 2012085063 A
- WO 2012146611 A
- WO 2012163998 A
- WO 2013013985 A
- WO 2013092340 A
- WO 2013152980 A
- WO 02088238 A
- EP 0510550 A